# EUROPÄISCHE PATENTANMELDUNG

(11) **EP 2 469 304 A2**
(43) Veröffentlichungstag der Anmeldung: **27.06.2012**
(21) Anmeldenummer: 11194707.3
(22) Anmeldetag: 20.12.2011
(51) Int. Cl.: G01T 1/02

(54) **Detektor zur Messung der Richtungs-Äquivalentdosis**

(30) Priorität: 21.12.2010 DE 202010017004 U
(71) Anmelder: Berthold Technologies GmbH & Co. KG, 75323 Bad Wildbad (DE); Karlsruher Institut für Technologie, 76131 Karlsruhe (DE)
(72) Erfinder: Becker, Dr. Frank, 76297 Stutensee (DE); Klett, Dr. Alfred, 75305 Neuenbürg (DE)
(74) Vertreter: Patentanwälte Ruff, Wilhelm, Beier, Dauster & Partner

(57) **Zusammenfassung**

Ein Detektor zur Messung der Richtungs-Äquivalentdosis H'(0,07,Ω), umfasst: ein lichtundurchlässiges, flächiges Abdeckelement (10), mit einer Massenbelegung in einem Bereich von 1 mg/cm² bis 15 mg/cm², bevorzugt 5 mg/cm² bis 9 mg/cm², welches als Eintrittsfenster für zu messende Strahlung dient, einen flächigen Szintillator (20) mit einer Dicke, die kleiner als 0,1 mm, bevorzugt kleiner als 0,05 mm, ist, einen Lichtleiter (30), und ein Nachweiselement (40) für sichtbares Licht, wobei der Szintillator durch das Abdeckelement abgedeckt ist und der Lichtleiter derart mit dem Szintillator und dem Nachweiselement für sichtbares Licht gekoppelt ist, dass im Szintillator erzeugtes Licht in das Nachweiselement für sichtbares Licht gelangt.

## Beschreibung

Die Erfindung betrifft einen Detektor zur Messung der Richtungs-Äquivalentdosis H'(0,07,Ω).

Im Bereich der medizinischen Therapie kommt es in zunehmendem Maße zum Einsatz von radioaktiven Stoffen. Um eine Abschätzung über die zu erwartenden Expositionen des medizinischen Personals treffen zu können, wurde in der deutschen Strahlenschutzverordnung vom 20.7.2001 für die Ortsdosimetrie unter anderem die so genannte Richtungs-Äquivalentdosis H'(0,07,Omega) bzw. H'(0,07,Ω) eingeführt, die eine Ortsdosis für Strahlung mit geringer Eindringtiefe ist, wobei Omega bzw. Ω die Richtung bezeichnet. Die Richtungs-Äquivalentdosis H'(0,07,Ω) dient zur Abschätzung einer Hautdosis.

Die Richtungs-Äquivalentdosis H'(0,07,Ω) am interessierenden Punkt im tatsächlichen Strahlungsfeld ist die Äquivalentdosis, die im zugehörigen aufgeweiteten Strahlungsfeld in 0,07mm Tiefe auf einem in festgelegter Richtung Ω orientierten Radius einer so genannten ICRU-Kugel erzeugt würde. Die ICRU-Kugel ist ein kugelförmiges Phantom von 30 Zentimeter Durchmesser aus ICRU-Weichteilgewebe. Die Einheit der Äquivalentdosis ist das Sievert (Einheitenzeichen Sv). Im Übrigen sei auf die einschlägige Strahlenschutzverordnung und auf die diesbezügliche Fachliteratur verwiesen, beispielsweise den ICRU-Report 56 (1997) und die DIN 6814-3 [ICRU56, DIN01].

Der Erfindung liegt die Aufgabe zugrunde, einen Detektor zur Messung der Richtungs-Äquivalentdosis H'(0,07,Ω) zur Verfügung zu stellen, der eine möglichst exakte Messung der Richtungsäquivalent-Dosis H'(0,07,Ω) ermöglicht und der gleichzeitig einfach handhabbar ist, beispielsweise um während einer medizinischen Behandlung mit radioaktiven Stoffen bereits während der Behandlung eine Messung zu ermöglichen.

Die Erfindung löst diese Aufgabe durch einen Detektor nach Anspruch 1.

Bevorzugte Ausführungsformen sind Gegenstand der Unteransprüche, die hiermit durch Bezugnahme zum Inhalt der Beschreibung gemacht werden.

Der Detektor dient Messung der Richtungs-Äquivalentdosis H'(0,07,Ω), d.h. der Detektor wird zur Messung der Richtungs-Äquivalentdosis H'(0,07,Ω) verwendet. Der Detektor ist aufgrund seiner Abmessungen insbesondere nicht zur endoskopischen Anwendung geeignet. Der Detektor umfasst ein lichtundurchlässiges, flächiges, insbesondere ebenes, Abdeckelement mit einer Massenbelegung in einem Bereich von 1 mg/cm² bis 15 mg/cm², bevorzugt 5 mg/cm² bis 9 mg/cm², insbesondere mit konstanter Dicke, welches als Eintrittsfenster für zu messende Strahlung dient. Das Abdeckelement weist bevorzugt hinsichtlich seiner Absorptionseigenschaften für durch das Abdeckelement tretende, zu messende Strahlung im Wesentlichen identische Eigenschaften auf wie gewebeäquivalentes Material bzw. Gewebe mit einer Dicke von 0,07 mm. Das Abdeckelement dient bevorzugt dazu, die in der Richtungs-Äquivalentdosis H'(0,07,Ω) definierte Eindringtiefe von 0,07 mm unter Berücksichtigung der sonstigen Detektorabmessungen abzubilden. Der Detektor umfasst weiter einen flächigen, bevorzugt ebenen, Szintillator mit einer, bevorzugt konstanten, Dicke, die gemittelt den punktförmigen Messpunkt in 0,07 mm Tiefe in der ICRU-Kugel abbildet. Erfindungsgemäß wird die bevorzugte Dicke des Szintillators hinsichtlich der neuen Messgröße H'(0,07,Ω) kleiner als 0,1 mm, bevorzugt kleiner als 0,05 mm, angegeben. Der Detektor umfasst weiter einen als Rückstreukörper wirkenden Lichtleiter, bevorzugt für sichtbares Licht und angrenzende Spektralbereiche, und einen Detektor bzw. ein Nachweiselement für sichtbares Licht, insbesondere für sichtbares Licht und angrenzende Spektralbereiche. Der Szintillator ist durch das Abdeckelement, bevorzugt vollständig, abgedeckt, so dass kein Umgebungslicht auf den Szintillator treffen kann, und der Lichtleiter ist derart mit dem Szintillator und dem Nachweiselement für sichtbares Licht gekoppelt, dass im Szintillator erzeugtes Licht in das Nachweiselement für sichtbares Licht gelangt. Mittels des erfindungsgemäßen, gut handhabbaren Detektors wird die Definition der Richtungs-Äquivalentdosis H'(0,07,Ω) gemäß Verordnung messtechnisch ausreichend genau nachgebildet, ohne dass hierzu beispielsweise die vollständige ICRU-Kugel Teil des Detektors sein müsste, da ein derartiger Detektors praktisch nicht mehr handhabbar wäre.

In einer Weiterbildung ist der Szintillator ein organischer Szintillator, insbesondere ein Plastik-Szintillator.

In einer Weiterbildung ist/sind der Szintillator und/oder das Abdeckelement scheibenförmig.

In einer Weiterbildung weist der Szintillator eine Fläche von ca. 1 cm² auf. Dies berücksichtigt, dass nach der Verordnung über den Schutz vor Schäden durch Röntgenstrahlen und der Verordnung über den Schutz vor Schäden durch ionisierende Strahlen die lokale Hautdosis aus der gemittelten Energiedosis der Haut in 0,07 mm Gewebetiefe hergeleitet wird, wobei die Mittelungsfläche 1 cm² beträgt, unabhängig von der exponierten Hautfläche.

In einer Weiterbildung ist der Lichtleiter flexibel.

In einer Weiterbildung weist der Detektor zur Messung der Richtungs-Äquivalentdosis eine lichtundurchlässige Kappe mit einer Öffnung auf, in die das Abdeckelement derart eingesetzt ist, dass die Öffnung im Wesentlichen vollständig durch das Abdeckelement ausgefüllt ist.

In einer Weiterbildung weist das Abdeckelement eine Massenbelegung von genau 7 mg/cm² auf.

In einer Weiterbildung ist das Nachweiselement für sichtbares Licht eine Photodiode, bevorzugt eine Lawinenphotodiode, oder ein Photomultiplier.

Die Erfindung wird nachfolgend unter Bezugnahme auf die Zeichnungen beschrieben, die bevorzugte Ausführungsformen der Erfindung darstellen. Hierbei zeigt/zeigen schematisch:
- Fig. 1: eine erste Ausführungsform eines Detektors zur Messung der Richtungs-Äquivalentdosis H'(0,07,Ω),
- Fig. 2: den in Fig. 1 gezeigten Detektor mit einer nachgeschalteten Auswerteelektronik,
- Fig. 3: eine zweite Ausführungsform eines Detektors zur Messung der Richtungs-Äquivalentdosis H'(0,07,Ω) und
- Fig. 4: eine dritte Ausführungsform eines Detektors zur Messung der Richtungs-Äquivalentdosis H'(0,07,Ω).

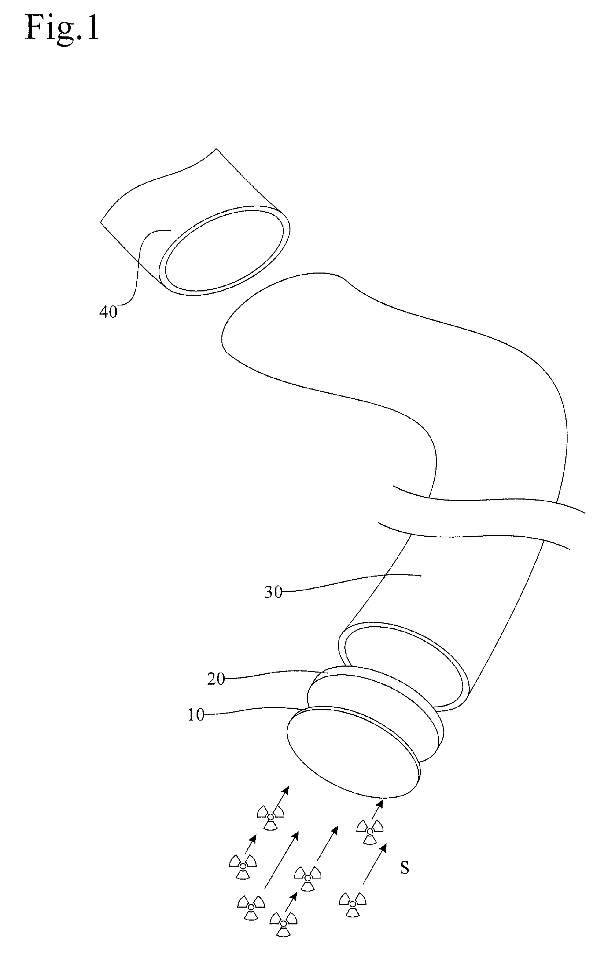

Fig. 1 zeigt eine erste Ausführungsform eines Detektors zur Messung der Richtungs-Äquivalentdosis H'(0,07,Ω) in Explosionsdarstellung. Die gezeigte Ausführungsform des Detektors umfasst ein lichtundurchlässiges, flächiges, ebenes, scheibenförmiges Abdeckelement 10 mit konstanter Dicke, welches eine Massenbelegung von ca. 7 mg/cm² aufweist.

Der Detektor umfasst weiter einen flächigen, ebenen, scheibenförmigen Plastik-Szintillator 20 mit konstanter Dicke, der in Richtung einer zu messenden ionisierenden Strahlung S durch das Abdeckelement 10 abgedeckt ist.

Eine dem Abdeckelement 10 abgewandte Oberfläche des Szintillators 20 ist mit einer Lichteintrittsseite eines herkömmlichen, langgestreckten, flexiblen Lichtleiters 30 optisch gekoppelt, wobei eine Lichtaustrittsseite des Lichtleiters 30 mit einem Photomultiplier 40 des Detektors optisch gekoppelt ist, wodurch im Szintillator aufgrund der Strahlung S erzeugtes Licht in den Photomultiplier 40 gelangt. Aufgrund des langgestreckten, flexiblen Lichtleiters 30 wird die Handhabbarkeit des Detektors deutlich verbessert. Der Photomultiplier 40 dient als Nachweiselement für sichtbares Licht.

Das Abdeckelement 10 und der Szintillator 20 sind jeweils scheibenförmig, wobei der Szintillator 20 eine Fläche von ca. 1 cm² und eine Dicke von ca. 0,05 mm aufweist. Das Abdeckelement 10 kann eine größere Fläche als der Szintillator 20 aufweisen. Die sich ergebende Messfläche beträgt ca. 1 cm².

Das Abdeckelement 10, welches als Eintrittsfenster für die zu messende Strahlung S dient, kann beispielsweise aus Titan mit einer Dicke gefertigt sein, die eine Massenbelegung von ca. 7 mg/cm² bewirkt.

Es versteht sich, dass die in Fig. 1 gezeigte, schematische Darstellung noch weitere, nicht gezeigte Elemente enthalten kann, beispielsweise eine lichtundurchlässige Kappe mit einer Öffnung, in die das Abdeckelement 10 derart eingesetzt ist, dass die Öffnung im Wesentlichen vollständig durch dieses ausgefüllt ist. Die Kappe kann beispielsweise zur Fixierung des Abdeckelements 10 und des Szintillators 20 auf dem Lichtleiter 30 dienen.

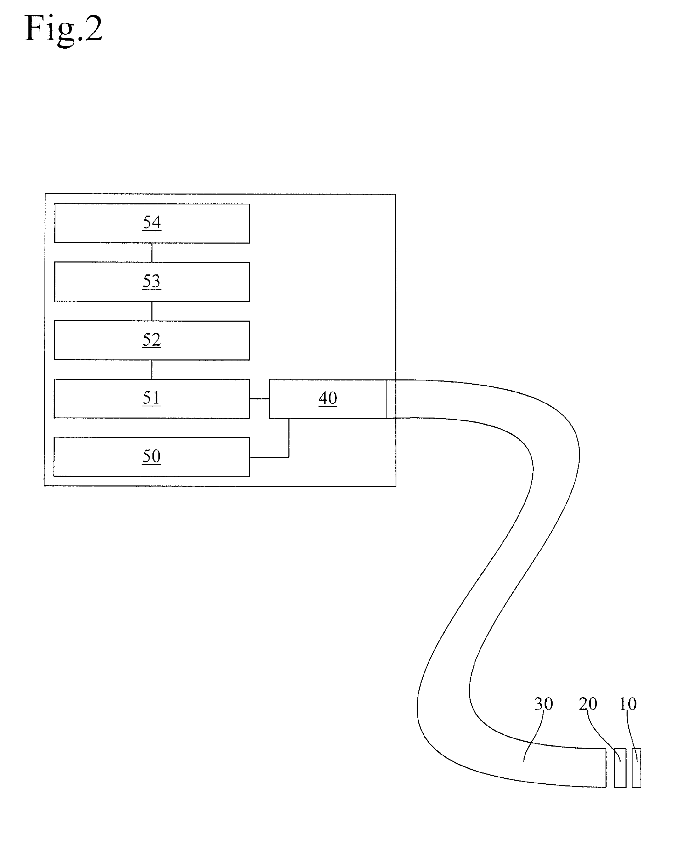

Fig. 2 zeigt den in Fig. 1 gezeigten Detektor mit einer nachgeschalteten Auswerteelektronik.

Der Photomultiplier 40 wird herkömmlich durch eine Hochspannungsversorgung 50 mit einer Hochspannung versorgt, wobei im Photomultiplier 40 erzeugte Signale durch einen Verstärker 51 verstärkt, durch einen Teiler 52 geeignet geteilt und anschließend von einem Mikroprozessor 53 ausgewertet werden. Schließlich kann die ermittelte Dosis durch ein Anzeigeelement 54 angezeigt werden. Der Verstärker 51, der Teiler 52, der Mikroprozessor 53, das Anzeigeelement 54 und der Photomultiplier 40 können gemeinsam in einem Gehäuse angeordnet sein, wobei der flexible Lichtleiter 30 durch eine Öffnung des Gehäuses eingeführt wird.

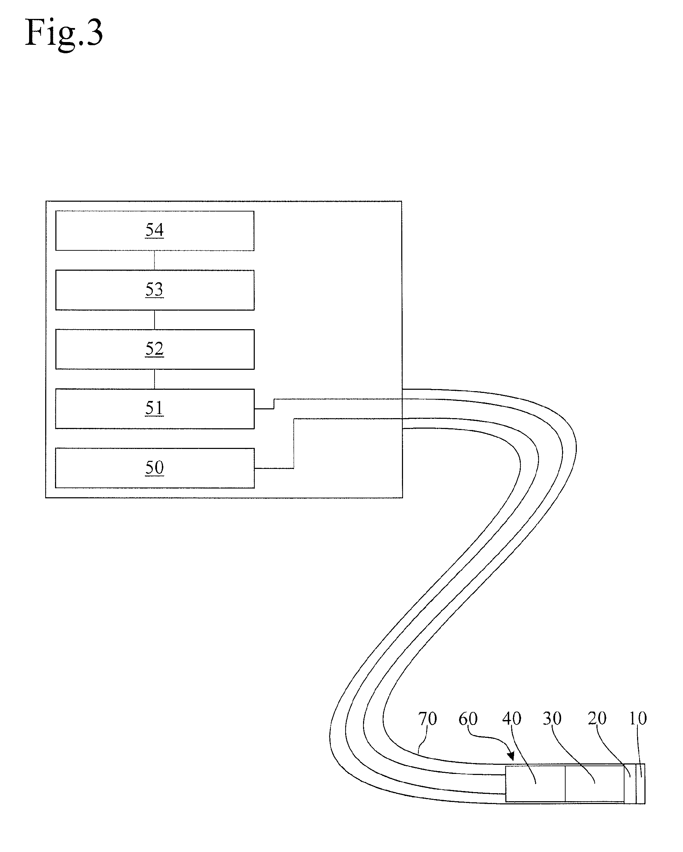

Fig. 3 zeigt eine weitere Ausführungsform eines Detektors zur Messung der Richtungs-Äquivalentdosis H'(0,07,Ω), bei der das Abdeckelement 10, der Szintillator 20, der Lichtleiter 30 und der Photomultiplier 40 in einem kompakten Gehäuse 60 angeordnet sind, wobei zwischen dem Photomultiplier 40 einerseits und der Hochspannungsversorgung 50 sowie dem Verstärker 51 andererseits ein flexibles Kabel 70 zur Übertragung der erforderlichen Signale eingeschleift ist. Das kompakte Gehäuse 60 dient zur Handhabung des Detektors und wird beispielsweise manuell zum Messort geführt.

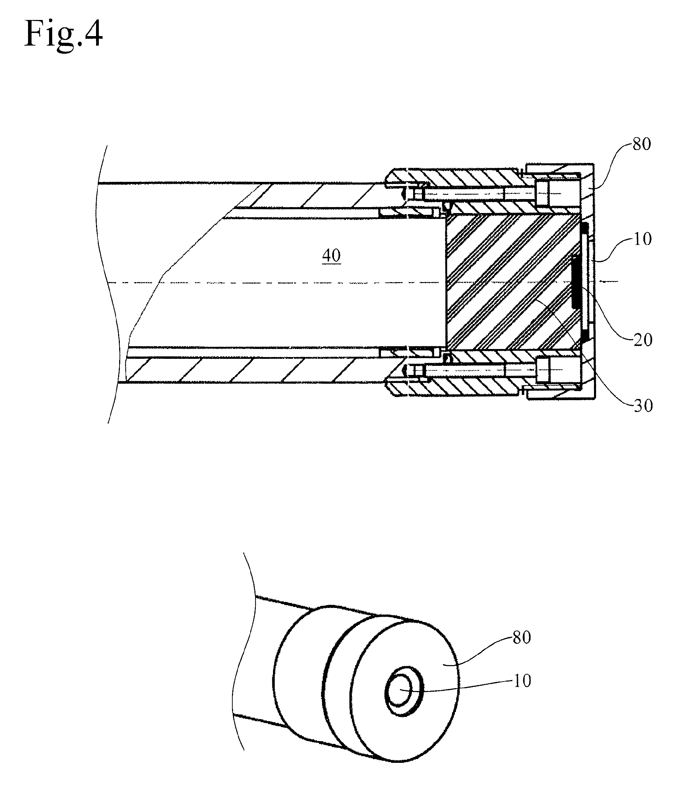

Fig. 4 zeigt eine weitere Ausführungsform eines Detektors zur Messung der Richtungs-Äquivalentdosis H'(0,07,Ω) mit einer lichtundurchlässigen Kappe 80, die eine Öffnung aufweist, in die das Abdeckelement 10 derart eingesetzt ist, dass die Öffnung vollständig durch das Abdeckelement 10 ausgefüllt ist. Das Abdeckelement 10 ist bei dieser Ausführungsform als Mylarfolie mit einer konstanten Dicke von 0,07 mm ausgebildet.

Allen gezeigten Ausführungsformen ist gemeinsam, dass sie die Definition der Messgröße gemäß der Verordnung unter Berücksichtigung der Handhabbarkeit ausreichend genau messtechnisch nachbilden.

Die Plastik-Szintillatorscheibe 20 mit einer sehr geringen Dicke von weniger als 0,5 mm und mit einer Fläche in einer Größenordnung von etwa 1 cm² dient als Strahlungsdetektor im Wesentlichen für Betateilchen und weiche Photonenstrahlung. Die Plastik-Szintillatorscheibe 20 ist durch das lichtdichte Abdeckelement 10 abgedeckt, dessen Schichtdicke bzw. Massenbelegung Gewebe mit einer Dicke von 0,07 mm entspricht.

Der Plastik-Szintillator 20 ist auf den Lichtleiter 30, beispielsweise aus Plexiglas, mit Abmessungen von typischerweise einigen Zentimetern aufgebracht. Der Lichtleiter 30 kann hierbei Rückstreueffekte in der ICRU-Kugel physikalisch repräsentieren. Das Szintillationslicht gelangt über den Lichtleiter 30 auf eine nicht gezeigte Photokathode des Photomultipliers 40 und wird dort als elektrischer Impuls nachgewiesen. Es versteht sich, dass anstatt des gezeigten Photomultipliers 40 ein beliebiges Nachweiselement für sichtbares Licht, beispielsweise eine Avalanche-Diode, verwendet werden kann.

Die Schichtdicke des Plastik-Szintillators 20 kann als Parameter für die Einstellung eines Verhältnisses der Effizienz zwischen Betateilchen und Photonenstrahlung dienen.

Die jeweiligen Oberflächen bzw. Grenzflächen des Abdeckelements 10, des Szintillators 20 und des Lichtleiters 30 können plan sein, wobei das Abdeckelement 10, der Szintillator 20 und der Lichtleiter 30 einen Schichtaufbau bilden. Es versteht sich, dass weitere, nicht gezeigte Elemente Teil dieses Schichtaufbaus sein können, d.h. es können weitere, nicht gezeigte Zwischenschichten vorhanden sein.

Die verwendeten Detektormaterialien sind derart gewählt, dass sie den Materialien des in der Verordnung definierten Phantoms entsprechen.

Mittels der Auswerteelektronik 50 bis 54 werden die im Photomultiplier 40 erzeugten Analogimpulse beispielsweise über eine oder mehrere elektronische Schwellen diskriminiert. Wenn mehr als ein Zählsignal ausgewertet wird, kann die Dosisberechnung beispielsweise über eine geeignete Linearkombination der Einzelzählraten ermittelt werden. Die Schwellen werden jeweils derart gewählt, dass sich eine optimale Energieabhängigkeit ergibt.

Die gezeigten Ausführungsformen ermöglichen eine zuverlässige Messung der Richtungs-Äquivalentdosis H'(0,07,Ω). Darüber hinaus sind die gezeigten Detektoren einfach handhabbar und ermöglichen so eine Messung bereits während des Umgangs mit radioaktiven Stoffen. Aufgrund der Dimensionierung ergibt sich ein hoher Dosisleistungsmessbereich, beispielsweise von 100 µSv/h bis 1 Sv/h. Darüber hinaus ergibt sich eine ausreichend gute Energie- und Winkelabhängigkeit für Beta-und Photonenstrahlung, obwohl der Detektor keine vollständige ICRU-Kugel aufweist.

## Patentansprüche

1. Detektor zur Messung der Richtungs-Äquivalentdosis H'(0,07,Ω), umfassend:
- ein lichtundurchlässiges, flächiges Abdeckelement (10), mit einer Massenbelegung in einem Bereich von 1 mg/cm² bis 15 mg/cm², bevorzugt 5 mg/cm² bis 9 mg/cm², welches als Eintrittsfenster für zu messende Strahlung dient,
- einen flächigen Szintillator (20) mit einer Dicke, die kleiner als 0,1 mm, bevorzugt kleiner als 0,05 mm, ist,
- einen Lichtleiter (30), und
- ein Nachweiselement (40) für sichtbares Licht, wobei
- der Szintillator durch das Abdeckelement abgedeckt ist und
- der Lichtleiter derart mit dem Szintillator und dem Nachweiselement für sichtbares Licht gekoppelt ist, dass im Szintillator erzeugtes Licht in das Nachweiselement für sichtbares Licht gelangt.

2. Detektor nach Anspruch 1, **dadurch gekennzeichnet, dass** der Szintillator ein organischer Szintillator ist.

3. Detektor nach Anspruch 1 oder 2, **dadurch gekennzeichnet, dass** der Szintillator und/oder das Abdeckelement scheibenförmig ist/sind.

4. Detektor nach einem der vorhergehenden Ansprüche, **dadurch gekennzeichnet, dass** der Szintillator eine Fläche von ca. 1 cm² aufweist.

5. Detektor nach einem der vorhergehenden Ansprüche, **dadurch gekennzeichnet, dass** der Lichtleiter flexibel ist.

6. Detektor nach einem der vorhergehenden Ansprüche, **gekennzeichnet durch** eine lichtundurchlässige Kappe mit einer Öffnung, in die das Abdeckelement derart eingesetzt ist, dass die Öffnung im Wesentlichen vollständig **durch** das Abdeckelement ausgefüllt ist.

7. Detektor nach einem der vorhergehenden Ansprüche, **dadurch gekennzeichnet, dass** das Abdeckelement eine Massenbelegung von genau 7mg/cm² aufweist.

8. Detektor nach einem der vorhergehenden Ansprüche, **dadurch gekennzeichnet, dass** das Nachweiselement für sichtbares Licht ein Photomultiplier oder eine Photodiode ist.
